# FASCICULE DE BREVET EUROPEEN

(11) **EP 1 728 663 B1**
(45) Date de publication et mention de la délivrance du brevet: **26.12.2007**
(21) Numéro de dépôt: 06290782.9
(22) Date de dépôt: 15.05.2006
(51) Int. Cl.: B60H 1/32

(54) **Dispositif de gestion de l'énergie thermique pour un véhicule**
Anordnung zur Steuerung der thermischen Energie für ein Kraftfahrzeug
Thermal energy control system for a vehicle

(30) Priorité: 30.05.2005 FR 0505531
(43) Date de publication de la demande: 06.12.2006
(73) Titulaire: NEXTER Systems, 42328 Roanne (FR)
(72) Inventeur: Bouysset, Jean-Louis, 78550 Bazainville (FR); Hoslin, Dominique, 78280 Guyancourt (FR); Cozic, Martial, 27570 Breux sur Avre (FR)
(74) Mandataire: Célanie, Christian

(56) Documents cités:
- EP-A- 1 500 802
- DE-A1- 2 756 348
- FR-A- 2 832 786

## Description

Le domaine technique de l'invention est celui des dispositifs de gestion de l'énergie thermique sur un véhicule et plus particulièrement sur un véhicule comportant un générateur électrique associant une pile à combustible et un reformeur d'hydrogène.

Les piles à combustible convertissent en énergie électrique l'énergie chimique d'une réaction d'oxydo réduction mettant en oeuvre de l'hydrogène. Ces piles à combustible ont une importance croissante dans les véhicules, aussi bien comme groupe auxiliaire de puissance que comme moyen générateur d'énergie à titre principal.

En effet elles permettent de réduire fortement les émissions gazeuses de dioxyde de carbone des véhicules. La pile ne rejette pratiquement que de la vapeur d'eau qui peut être récupérée.

Les piles à combustible sont bien connues de l'Homme du Métier. On connaît notamment les piles PEMFC à membrane échangeuse de protons qui ont pour caractéristique de fonctionner à basse température (de l'ordre de 80°C).

Ces dernières peuvent être associées à un reformeur d'hydrogène qui permet de générer de l'hydrogène en utilisant de l'eau et un combustible tel que l'essence, le gasoil, le méthanol, le gaz naturel, le diester ou un autre hydrocarbure.

Le reformeur fonctionne à une température généralement élevée (de 800°C à 1000°C) alors que la pile à combustible à membrane fonctionne d'une façon optimale à une température de l'ordre de 80°C.

Il a été proposé d'utiliser l'énergie thermique engendrée par une pile à combustible pour réchauffer l'habitacle du véhicule ou bien pour le climatiser en la couplant à un circuit frigorifique conventionnel mettant en oeuvre un compresseur.

Le brevet FR2805926 propose ainsi un dispositif de gestion thermique pour véhicule dans lequel un circuit primaire d'un fluide caloporteur assure la régulation de la température de la pile à combustible. Ce circuit primaire est en relation d'échange thermique avec un circuit secondaire frigorifique.

Le brevet FR 2 832 786 décrit un système de régulation thermique à absorption pour un véhicule électrique équipé d'une pile à combustible qui comprend notamment une pile à combustible, un reformeur d'hydrogène, un circuit primaire permettant de prélever des calories de la pile à combustible afin de les acheminer vers un bouilleur.

L'inconvénient des dispositifs connus est que l'énergie thermique disponible au niveau de la pile à combustible n'est pas suffisante pour assurer la plupart des fonctions thermiques nécessaires dans un véhicule. De plus il est nécessaire de réguler la température du circuit de refroidissement de la pile à combustible autour de 80°C ce qui limite les possibilités d'emploi de l'énergie thermique au niveau des circuits d'échange.

Le circuit frigorifique incorpore donc un compresseur et, s'il permet de réduire en partie la température du circuit primaire, c'est essentiellement l'énergie électrique qui est fournie au compresseur qui permet d'obtenir le niveau de refroidissement souhaité. Il en résulte une sollicitation supplémentaire de la pile à combustible.

Par ailleurs les compresseurs frigorifiques sont des organes bruyants dont la mise oeuvre dans un véhicule peut poser des problèmes, notamment lorsque le véhicule est un véhicule militaire qui doit pouvoir rester en position de veille en étant le plus furtif possible, tant d'un point de vue acoustique que d'un point de vue thermique.

C'est le but de l'invention de proposer un dispositif de gestion de l'énergie thermique pour un véhicule qui permet de pallier de tels inconvénients.

Ainsi le dispositif selon l'invention permet d'optimiser l'utilisation de l'énergie thermique, et en particulier de celle qui est engendrée par le générateur, tout en assurant une discrétion acoustique totale. Il permet également, lorsque l'invention est mise en oeuvre dans un véhicule militaire, d'assurer des fonctions de masquage thermique.

Ainsi l'invention a pour objet un dispositif de gestion de l'énergie thermique pour un véhicule, et notamment pour un véhicule équipé d'un générateur électrique associant une pile à combustible et un reformeur d'hydrogène, dispositif comprenant au moins un circuit primaire de circulation d'un premier fluide caloporteur, circuit permettant de prélever des calories au niveau d'une source thermique et de les transporter vers au moins un échangeur thermique, et au moins un échangeur thermique constitué par un échangeur à sorption, dispositif caractérisé en ce que le circuit primaire pourra comprendre une boucle fermée sur laquelle seront raccordées au moins deux dérivations placées en série et formant chacune la source chaude d'un échangeur distinct, chaque dérivation étant shuntée par une branche du circuit primaire qui est équipée d'une vanne.

Le circuit primaire pourra prélever des calories au niveau d'un échappement du véhicule.

Le circuit primaire pourra prélever des calories au niveau du reformeur.

Le circuit primaire pourra en particulier prélever les calories par convection ou par contact direct avec une partie chaude du reformeur et/ou de l'échappement.

Selon une autre caractéristique, le dispositif de gestion de l'énergie thermique pourra comprendre au moins un échangeur thermique à convection assurant le chauffage d'un organe du véhicule.

Il pourra notamment comporter un échangeur thermique à convection qui permet l'échange de calories avec le circuit de refroidissement d'un moteur du véhicule.

Chaque échangeur à sorption pourra ainsi comporter un circuit secondaire d'un deuxième fluide caloporteur qui est isolé du circuit primaire et qui utilise comme source chaude une dérivation du circuit primaire.

Le dispositif de gestion de l'énergie thermique pourra comporter un boîtier de commande assurant le pilotage des températures des différents circuits d'échange thermique en fonction des consignes données par un opérateur ou conservées en mémoire.

Selon différentes variantes : le dispositif peut comporter un échangeur à sorption qui permet le refroidissement de circuits électroniques et/ou un échangeur à sorption qui permet le refroidissement d'au moins une batterie de stockage d'énergie électrique et/ou un échangeur à sorption qui permet le refroidissement d'une unité de climatisation du véhicule.

Avantageusement le dispositif peut comporter un échangeur à sorption qui permet le refroidissement d'au moins un caisson d'isolation thermique disposé au niveau d'une partie chaude du véhicule.

L'invention sera mieux comprise à la lecture de la description qui va suivre de différents modes de réalisation, description faite en référence aux dessins annexés dans lesquels :
- la figure 1 est une représentation schématique d'un dispositif de gestion de l'énergie thermique suivant un premier mode de réalisation de l'invention,
- la figure 2 est une vue schématique en coupe d'un véhicule blindé à roues montrant un mode de réalisation de caissons d'isolation thermiques associés au dispositif selon l'invention,
- la figure 3 est une représentation schématique d'un dispositif de gestion de l'énergie thermique suivant un deuxième mode de réalisation de l'invention.

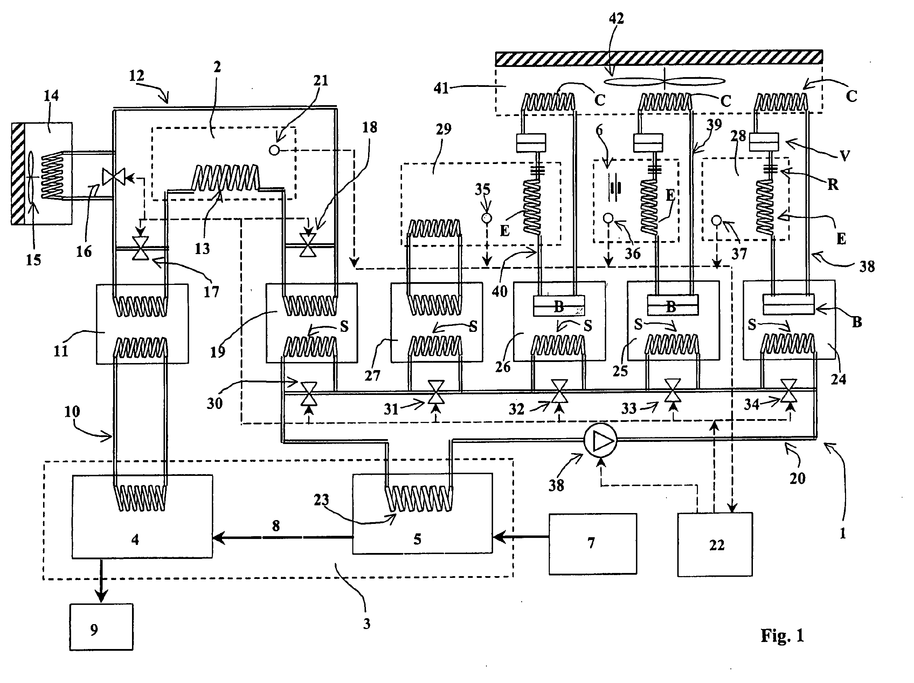

En se reportant à la figure 1, un dispositif de gestion de l'énergie thermique 1 selon l'invention est mis en place sur un véhicule non représenté, qui sera par exemple un véhicule blindé.

Ce véhicule est ici un véhicule à propulsion thermique conventionnelle qui comprend un moteur 2. Ce véhicule comprend un groupe auxiliaire de puissance qui est formé par un générateur électrique 3 qui associe une pile à combustible 4 et un reformeur d'hydrogène 5.

Le réseau électrique du véhicule (non représenté) comprend aussi des batteries 6 de stockage qui permettent par ailleurs de lisser les transitoires (pics de tension) sur le réseau électrique lors de l'utilisation du générateur 3.

Le générateur électrique n'est pas décrit en détails car il ne constitue pas l'objet de la présente invention. Il comprend d'une façon classique des moyens de conversion intégrés au reformeur 5 et qui permettent de générer de l'hydrogène à partir d'eau et d'un combustible conventionnel stocké dans un réservoir 7. Le reformeur 5 alimente ainsi en hydrogène (canalisation 8) la pile à combustible 4.

L'eau produite par la pile à combustible 4 pourra être stockée dans une réserve 9 pour pouvoir être utilisée par l'équipage du véhicule. Une partie de cette eau pourra par ailleurs être réintégrée à un circuit 10 de refroidissement de la pile à combustible. Un tel recyclage de l'eau est connu et décrit par la demande FR2805926.

D'une façon classique le circuit de refroidissement 10 incorpore un échangeur thermique 11 qui permet de refroidir la pile à combustible 4 à l'aide du circuit de refroidissement principal 12 du moteur thermique 2. Ce dernier circuit comprend une tubulure 13 qui est disposée au niveau du moteur 2 et raccordée à un radiateur 14 qui pourra être équipé d'un ventilateur 15 permettant un échange thermique avec l'air ambiant au véhicule.

Des vannes 16, 17 et 18 sont disposées sur le circuit 12 et elles permettent de shunter respectivement: le radiateur 14, l'échangeur 11 et un deuxième échangeur 19 associé à un circuit primaire 20 qui sera décrit par la suite.

Les vannes 16, 17 et 18 permettent ainsi de réguler les échanges thermiques entre le circuit de refroidissement 12 du moteur et les sources chaudes constituées par le circuit de refroidissement 10 de la pile à combustible et le circuit primaire 20.

La régulation thermique sera assurée par un boîtier électronique de commande 22 en fonction de la température réelle du moteur 2 mesurée par un sonde thermique 21.

Conformément à l'invention le dispositif 1 comporte donc également un circuit primaire 20 de circulation d'un premier fluide caloporteur. Ce circuit permet (comme le circuit 10) de prélever des calories au niveau d'une source thermique qui est ici le reformeur 5. Le prélèvement se fera par convection ou par contact direct avec une partie du reformeur. On a schématisé sur les figures ce moyen de prélèvement par un serpentin 23.

Le circuit primaire 20 permet de transporter les calories fournies par le reformeur 5 vers au moins un échangeur thermique : 19, 24, 25, 26, 27.

Selon une caractéristique essentielle de l'invention, au moins un des échangeurs thermiques est constitué par un échangeur à sorption (c'est à dire utilisant la technique de l'absorption ou de l'adsorption).

Les échangeurs à absorption sont connus, notamment dans le domaine de la réfrigération portative. Ils mettent en oeuvre un fluide caloporteur qui est le plus souvent un mélange d'ammoniaque et d'eau. Le fluide est évaporé au niveau d'un bouilleur B, il passe dans un condenseur C qui est réfrigéré par air, le liquide est ensuite récupéré dans un vase V qui est relié à un évaporateur E par l'intermédiaire d'une restriction R. La sortie de l'évaporateur E est reliée au bouilleur B.

Le système est fiable et fonctionne en continu. Il est simplement nécessaire de fournir (d'une façon continue ou intermittente) de la chaleur au niveau du bouilleur B. Avec un fluide associant ammoniaque et eau la température souhaitée est de l'ordre de 80°C à 100°C. Les réfrigérateurs à absorption connus utilisent un brûleur par exemple à gaz pour vaporiser le fluide, ou encore un chauffage électrique.

Les échangeurs à adsorption sont également connus de l'Homme du Métier. Ces échangeurs diffèrent des échangeurs à absorption en ce que le fluide caloporteur mis en oeuvre circule au niveau de la surface d'un matériau échangeur et non dans son volume.

Conformément à l'invention on utilisera la chaleur prélevée au niveau du reformeur 5 pour échauffer le fluide de trois échangeurs frigorifiques (ici à absorption) 24, 25, et 26.

Chaque échangeur à absorption comporte ici un circuit secondaire 38, 39, 40 d'un deuxième fluide caloporteur. Chaque circuit secondaire est complètement isolé du circuit primaire 20 et comprend : bouilleur, condenseur, vase, restriction et évaporateur.

Chaque circuit secondaire utilise comme source chaude une dérivation du circuit primaire. Les condenseurs C des différents circuits réfrigérants 38, 39, 40 pourront être réunis dans un radiateur unique 41 incorporant un ventilateur 42. Il est bien entendu également possible en fonction des contraintes d'intégration du véhicule de prévoir plusieurs radiateurs, par exemple un pour chaque condenseur C. On pourra aussi avantageusement regrouper en un seul radiateur le radiateur 41 et celui 14 associé au moteur.

L'échangeur 24 permet par exemple de refroidir un compartiment électronique 28. L'échangeur 25 permet de refroidir les batteries 6 du véhicule et l'échangeur 26 permet de fournir en frigories un ensemble climatiseur 29 pour l'habitacle du véhicule.

Par ailleurs l'échangeur 27 est un échangeur à convection classique qui permet d'alimenter en calories le climatiseur 29.

Enfin l'échangeur 19 est lui aussi un échangeur thermique à convection. Il permet l'échange de calories entre le circuit primaire 20 et le circuit de refroidissement 12 du moteur 2 du véhicule.

Suivant ce premier mode de réalisation de l'invention, le circuit primaire 20 est une boucle fermée sur laquelle sont raccordés les différents échangeurs sous la forme de plusieurs dérivations placées en série les unes derrière les autres.

Chaque dérivation (schématisée par un serpentin S) forme ainsi la source chaude d'un échangeur distinct. Chaque dérivation est par ailleurs shuntée par une branche du circuit primaire 20 qui est équipée d'une vanne 30, 31, 32, 33, 34. Les différentes vannes permettent de régler le débit du fluide du circuit primaire qui circule dans l'échangeur considéré.

On peut ainsi répartir l'énergie thermique affectée à chaque élément en fonction des besoins opérationnels.

Les différentes vannes sont reliées à un boîtier de commande électronique 22 qui assure le pilotage des températures des différents circuits d'échange thermique en fonction des consignes données par un opérateur (ou stockées en mémoires). L'unité de commande est par ailleurs reliée à des sondes de températures 35, 36, 37 qui sont associées aux différentes enceintes réchauffées ou refroidies.

On notera que, si l'ouverture complète d'une des vannes 30, 31, 32, 33 ou 34 ne suffit pas à shunter complètement le serpentin S de l'échangeur considéré, il est possible de remplacer cette vanne par une vanne "tout ou rien" (non représentée) qui sera disposée sur la branche en amont du serpentin S considéré. Cette vanne permettra de couper la dérivation et empêchera le passage du fluide du circuit primaire dans le serpentin S considéré.

Le circuit primaire 20 comporte enfin une pompe 38 qui permet de régler le débit du fluide caloporteur en fonction des besoins. Cette pompe est également reliée au boîtier de commande 22.

Avec ce mode particulier de réalisation, chaque échangeur à sorption 24, 25 et 26 comporte un circuit secondaire qui est isolé du circuit primaire. Il est possible de réguler d'une façon indépendante la température de fonctionnement de ce circuit sans pénaliser les performances des autres échangeurs. Il est ainsi possible de ne commander les vannes 32, 33 et 34 que par intermittence de façon à assurer l'ébullition des fluides caloporteurs des différents circuits 38, 39, 40. Il est possible également d'isoler complètement un de ces circuits du circuit primaire 20 s'il n'est plus utile. On peut enfin fermer la vanne 30 pour activer l'échangeur 19 et évacuer ainsi un excès de chaleur vers le circuit 12 de refroidissement du moteur.

On notera que l'échangeur 19 peut aussi assurer un préchauffage du moteur en cas de besoin. Il est alors inutile de mettre en oeuvre d'autres moyens de démarrage à froid du moteur. La pompe 38 permet dans tous les cas d'améliorer les performances des échangeurs en adaptant le débit de fluide aux performances recherchées et à la température du fluide du circuit primaire 20.

L'efficacité du dispositif proposé est liée à la température importante de la source thermique constituée par le reformeur 5 (de 800°C à 1000°C) qui assure donc la fourniture d'une façon fiable et stable de l'énergie thermique nécessaire pour la plupart des besoins du véhicule.

On notera que la température du reformeur n'a pas à être fixée d'une façon rigoureuse à un niveau donné pour que le fonctionnement du reformeur soit optimal. On a donc ainsi une grande souplesse pour l'utilisation qui peut être faite de cette énergie et il est possible d'ajouter ou retirer facilement des unités utilisant l'énergie thermique du circuit primaire 20.

Cela n'est pas le cas avec la pile à combustible 4 elle-même dont la température est bien inférieure (de l'ordre de 80°C) et doit être stabilisée pour que la production d'électricité soit optimale. Les dispositifs connus utilisent donc relativement peu l'énergie thermique produite par la pile et se préoccupent plutôt de réguler la température de cette dernière.

Un autre avantage de l'invention est que les échangeurs à sorption sont totalement silencieux. Cette caractéristique est importante pour le confort des occupants du véhicule et elle est également essentielle pour garantir la discrétion acoustique d'un véhicule blindé.

On notera ainsi que dans les véhicules classiques, la climatisation met en oeuvre un ou plusieurs compresseurs frigorifiques qui consomment de l'énergie électrique. Grâce à l'invention il est possible de supprimer ces compresseurs et de réduire la consommation électrique. Lorsque le ou les compresseurs étaient entraînés par le moteur thermique il était par ailleurs nécessaire de mettre en route celui-ci ce qui est bruyant. L'invention permet donc d'accroître la discrétion acoustique du véhicule.

Il est bien entendu possible de prévoir d'autres échangeurs thermiques. Par exemple des échangeurs à convection pour assurer un chauffage d'un autre élément (par exemple pour chauffer les batteries en cas de démarrage par grand froid). On pourra aussi prévoir d'autres échangeurs à absorption répartis au niveau des différents organes électroniques du véhicule qu'il est nécessaire de refroidir.

Il est également possible de mettre en oeuvre l'invention en couplant le circuit primaire 20 à une autre source thermique que le reformeur 5.

On pourra ainsi placer le serpentin 23 au contact ou à proximité d'un échappement (non représenté) du moteur thermique 2. Cette variante n'est pas représentée sur les figures mais le circuit thermique serait pratiquement identique et ne diffèrerait que par la localisation du serpentin 23.

Les températures des échappements sont relativement fortes (potentiellement 500 à 600°C à l'endroit où serait implanté l'échangeur, valeur à ajuster en fonction de l'architecture du véhicule) et l'énergie thermique qui est disponible est donc importante.

Un des avantages de ce mode de réalisation est que le prélèvement d'énergie thermique au niveau de l'échappement permet également de refroidir ce dernier ce qui accroît la discrétion thermique du véhicule.

Suivant un mode de réalisation particulièrement intéressant, on pourra mettre en oeuvre un échangeur à sorption pour assurer le refroidissement d'un ou plusieurs caissons d'isolation thermique.

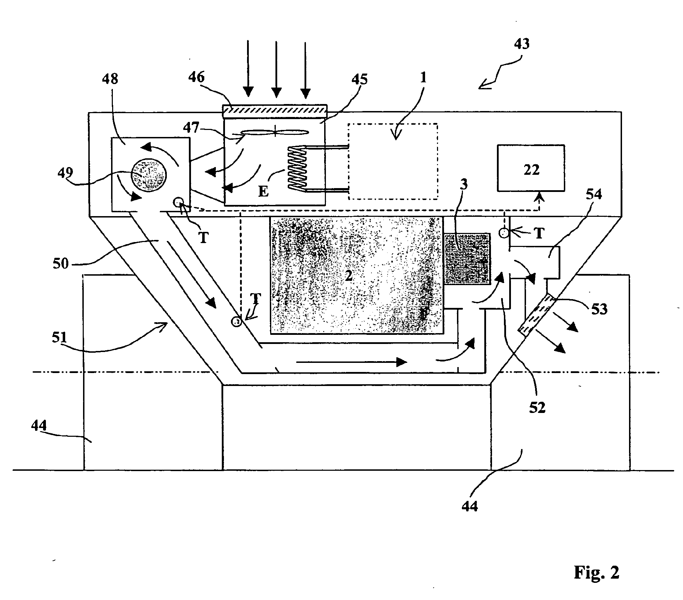

La figure 2 montre ainsi schématiquement en coupe une partie arrière d'un véhicule 43 à roues 44 sur lequel on a représenté le moteur thermique 2 ainsi que le générateur électrique 3 associant pile à combustible et reformeur.

Le dispositif de gestion de l'énergie thermique 1 comprend un échangeur qui est relié au circuit primaire 20. Cet échangeur est un échangeur à sorption dont seul l'évaporateur E est représenté ici. Cet évaporateur est disposé dans un caisson 45 qui communique avec l'extérieur du véhicule par une grille 46 qui permet l'admission d'air. Un ventilateur 47 disposé dans le caisson permet de régler le débit d'air aspiré.

Le caisson 45 est ici relié à un autre caisson 48 qui entoure une tubulure d'échappement 49 du moteur thermique 1.

Le caisson 48 communique avec un troisième caisson 50 qui longe une paroi 51 du véhicule 43, puis débouche sur un quatrième caisson 52 qui entoure le générateur électrique 3. L'air est expulsé vers l'extérieur au travers d'une grille 53 qui est reliée au caisson 52 par une tubulure 54.

Ainsi l'air aspiré à l'extérieur est refroidi grâce à l'évaporateur E puis il est envoyé dans différents caissons qui assurent une isolation thermique de différentes parties chaudes du véhicule (moteur 2, échappement 49, générateur électrique 3).

Chaque caisson sera avantageusement équipé d'une sonde de température T qui sera reliée au boîtier de commande 22 assurant la régulation du dispositif. La comparaison entre les températures mesurées par les sondes T et les valeurs de consigne programmées dans le boîtier de commande 22 provoquera (avec un algorithme de pilotage approprié) la mise en route ou l'accélération du ventilateur 47 et la modification de la consigne de température donnée à l'échangeur à sorption associé à l'évaporateur E disposé dans le caisson 45.

Il est possible ainsi de maîtriser parfaitement la signature thermique du véhicule en fonction des températures réelles des différentes parties chaudes.

La figure 2 n'est bien entendu qu'un schéma simplifié permettant de décrire l'invention. Il est possible en fonction des données de construction du véhicule et des températures des différentes parties chaudes de prévoir plusieurs échangeurs à sorption pour réguler des caissons isolants thermiques distincts.

On pourrait ainsi prévoir des évaporateurs différents (couplés à des échangeurs différents) pour le caisson 48, le caisson 50 et le caisson 52.

Une telle solution permettrait de maîtriser encore plus précisément les températures. En effet les températures des parties chaudes peuvent être très différentes d'un caisson à l'autre. Il est donc judicieux de piloter les températures de chaque caisson de façon individualisée.

Il sera cependant possible d'associer tous les caissons à une seule aspiration d'air externe et à une seule évacuation d'air. On prévoira pour cela des tuyauteries appropriées pour conduire en parallèle le flux d'air, de l'extérieur vers chaque caisson et de chaque caisson vers l'extérieur.

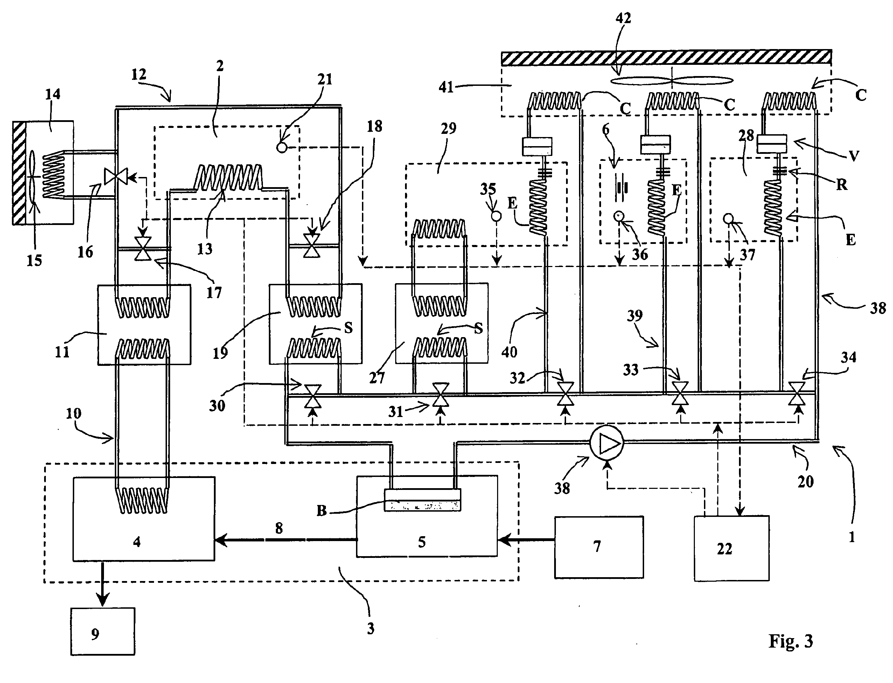

La figure 3 montre un dispositif de gestion de l'énergie thermique 1 selon un deuxième mode de réalisation de l'invention.

Les éléments constitutifs de ce dispositif qui sont analogues à ceux décrits précédemment sont repérés par les mêmes chiffres. Il n'est pas nécessaire de les décrire à nouveau en détails.

Ce mode de réalisation diffère de celui de la figure 1 en ce que le circuit primaire 20 n'est plus isolé des circuits secondaires 38, 39 et 40 des différents échangeurs à sorption.

Ainsi un seul bouilleur B dimensionné de façon appropriée est disposé au contact du reformeur 5 et il conduit le premier fluide caloporteur (qui associe par exemple de l'ammoniaque et de l'eau) jusqu'au différents condenseurs C via des dérivations implantées sur le circuit primaire 20.

Comme dans le mode de réalisation précédent, chaque dérivation est shuntée par une branche du circuit primaire qui est équipée d'une vanne 32, 33, 34. Comme dans le mode de réalisation précédent, il est bien entendu possible de remplacer chaque vanne 32, 33, 34 par une vanne "tout ou rien" (non représentée) qui sera disposée sur la branche en amont de l'échangeur considéré. Cette vanne permettra de couper la dérivation et empêchera le passage du fluide du circuit primaire dans l'échangeur à sorption considéré.

Le boîtier de contrôle 22 permet là encore de piloter le débit de fluide caloporteur qui est donné dans chaque échangeur à sorption, donc également la mise en oeuvre ou l'arrêt de chaque ab (ou ad-)sorbeur ainsi que le réglage de la température.

Le circuit primaire comprend comme dans le mode de réalisation précédent des échangeurs à convection 19 et 27 qui récupèrent de la chaleur sur le fluide primaire.

La description précédente a été faite en référence à des échangeurs à sorption associant un mélange d'ammoniaque et d'eau. Il est bien entendu possible (en fonction des besoins d'échanges thermiques rencontrés) d'utiliser d'autres couples de fluides caloporteurs tels que : eau / bromure de lithium ; ammoniaque / nitrate de lithium; méthylamine / eau; méthanol / bromure de lithium.

Il est également possible de mettre en oeuvre l'invention en utilisant des échangeurs à adsorption.

## Revendications

1. Dispositif de gestion (1) de l'énergie thermique pour un véhicule, et notamment pour un véhicule équipé d'un générateur électrique (3) associant une pile à combustible (4) et un reformeur d'hydrogène (5), dispositif comprenant au moins un circuit primaire (20) de circulation d'un premier fluide caloporteur, circuit permettant de prélever des calories au niveau d'une source thermique (5) et de les transporter vers au moins un échangeur thermique (19,24,25,26,27), et au moins un échangeur thermique (24,25,26) constitué par un échangeur à sorption, dispositif **caractérisé en ce que** le circuit primaire (20) comprend une boucle fermée sur laquelle sont raccordées au moins deux dérivations (S) placées en série et formant chacune la source chaude d'un échangeur distinct, chaque dérivation étant shuntée par une branche du circuit primaire (20) qui est équipée d'une vanne (30,31,32,33,34).

2. Dispositif de gestion de l'énergie thermique selon la revendication 1, **caractérisé en ce que** le circuit primaire (20) prélève des calories au niveau d'un échappement du véhicule.

3. Dispositif de gestion de l'énergie thermique selon la revendication 1, **caractérisé en ce que** le circuit primaire (20) prélève des calories au niveau du reformeur (5).

4. Dispositif de gestion de l'énergie thermique selon une des revendications 2 ou 3, **caractérisé en ce que** le circuit primaire (20) prélève les calories par convection ou par contact direct avec une partie chaude du reformeur (5) et/ou de l'échappement.

5. Dispositif de gestion de l'énergie thermique selon une des revendications 1 à 4, **caractérisé en ce qu'**il comprend au moins un échangeur thermique à convection (19,27) assurant le chauffage d'un organe du véhicule.

6. Dispositif de gestion de l'énergie thermique selon la revendication 5, **caractérisé en ce qu'**il comporte un échangeur thermique à convection (19) qui permet l'échange de calories avec le circuit de refroidissement (12) d'un moteur (2) du véhicule.

7. Dispositif de gestion de l'énergie thermique selon l'une des revendications 1 à 6, **caractérisé en ce que** chaque échangeur à sorption (24,25,26) comporte un circuit secondaire (38,39,40) d'un deuxième fluide caloporteur qui est isolé du circuit primaire (20) et qui utilise comme source chaude une dérivation du circuit primaire.

8. Dispositif de gestion de l'énergie thermique selon une des revendications 1 à 7, **caractérisé en ce qu'**il comporte un boîtier de commande (22) assurant le pilotage des températures des différents circuits d'échange thermique en fonction des consignes données par un opérateur ou conservées en mémoire.

9. Dispositif de gestion de l'énergie thermique selon une des revendications 1 à 8, **caractérisé en ce qu'**il comporte un échangeur à sorption qui permet le refroidissement de circuits électroniques (28).

10. Dispositif de gestion de l'énergie thermique selon une des revendications 1 à 9, **caractérisé en ce qu'**il comporte un échangeur à sorption qui permet le refroidissement d'au moins un caisson (45,48,50,52) d'isolation thermique disposé au niveau d'une partie chaude du véhicule.

11. Dispositif de gestion de l'énergie thermique selon une des revendications 1 à 10, **caractérisé en ce qu'**il comporte un échangeur à sorption qui permet le refroidissement d'au moins une batterie (6) de stockage d'énergie électrique.

12. Dispositif de gestion de l'énergie thermique selon une des revendications 1 à 11, **caractérisé en ce qu'**il comporte un échangeur à sorption qui permet le refroidissement d'une unité de climatisation (29) du véhicule.

## Claims

1. A thermal energy management device (1) for a vehicle, namely a vehicle equipped with an electric generator (3) associating a fuel cell (4) and hydrogen reformer (5), such device comprising at least one primary circuit (20) circulating a first heat-conducting fluid, such circuit enabling calories to be collected from a thermal source (5) and transported to at least one thermal exchanger (19, 24, 25, 26, 27), and at least one thermal exchanger (24, 25, 26) constituted by a sorption exchanger, **characterised in that** the primary circuit (20) comprises a closed loop to which at least two side outlets (S), positioned in series and each forming the heat source for a separate exchanger, are linked, each side outlet being shunted by a branch of the primary circuit (20) equipped with a valve (30, 31, 32, 33, 34).

2. A thermal energy management device according to Claim 1, **characterised in that** the primary circuit (20) collects calories from a vehicle exhaust.

3. A thermal energy management device according to Claim 1, **characterised in that** the primary circuit (20) collects calories from a reformer (5).

4. A thermal energy management device according to one of Claims 2 or 3, **characterised in that** the primary circuit (20) collects calories by convection or by direct contact with a hot part of the reformer (5) and/or exhaust.

5. A thermal energy management device according to one of Claims 1 to 4, **characterised in that** it comprises at least one thermal convection exchanger (19, 27) ensuring the heating of an organ of the vehicle.

6. A thermal energy management device according to Claim 5, **characterised in that** it incorporates a thermal convection exchanger (19) which enables calories to be exchanged with the cooling circuit (12) of an engine (2) of the vehicle.

7. A thermal energy management device according to one of Claims 1 to 6, **characterised in that** each sorption exchanger (24, 25, 26) incorporates a secondary circuit (38, 39, 40) of a second heat-conducting fluid isolated from the primary circuit (20) and using a side outlet from the primary circuit as a heat source.

8. A thermal energy management device according to one of Claims 1 to 7, **characterised in that** it incorporates a control unit (22) piloting the temperatures of the different thermal exchange circuits according to instructions given by an operator or memorised.

9. A thermal energy management device according to one of Claims 1 to 8, **characterised in that** it incorporates a sorption exchanger enabling the cooling of electronic circuits (28).

10. A thermal energy management device according to one of Claims 1 to 9, **characterised in that** it incorporates a sorption exchanger enabling the cooling of at least one thermal insulation chamber (45, 48, 50, 52) arranged around a hot part of the vehicle.

11. A thermal energy management device according to one of Claims 1 to 10, **characterised in that** it incorporates a sorption exchanger enabling the cooling of at least one electrical energy storage battery (6).

12. A thermal energy management device according to one of Claims 1 to 11, **characterised in that** it incorporates a sorption exchanger enabling the cooling of an air-conditioning unit (29) of the vehicle.

## Patentansprüche

1. Vorrichtung zur Verwaltung (1) von thermischer Energie für ein Fahrzeug, und insbesondere für ein Fahrzeug, das mit einem elektrischen Stromerzeuger (3) ausgerüstet ist, der eine Brennstoffzelle (4) und einen Wasserstoff-Reformer (5) verknüpft, wobei die Vorrichtung wenigstens einen Primärkreis (20) zur Zirkulation eines ersten Kälteträgerfluids, wobei der Kreis es ermöglicht, Wärme im Bereich einer Wärmequelle (5) abzuführen und sie zu wenigstens einem Wärmetauscher (19,24,25,26,27) zu transportieren, und wenigstens einen Wärmetauscher (24,25,26) umfasst, der von einem Austauscher durch Sorption gebildet wird, wobei die Vorrichtung **dadurch gekennzeichnet ist, dass** der Primärkreis (20) eine geschlossene Schleife umfasst, an der wenigstens zwei Bypässe (S) angeschlossen sind, die in Serie angeordnet sind und die jeweils die heiße Quelle eines unterschiedlichen Austauschers bilden, wobei jeder Bypass durch einen Zweig des Primärkreises (20) parallel geschaltet wird, der mit einem Ventil (30, 31, 32, 33, 34) ausgerüstet ist.

2. Vorrichtung zur Verwaltung von thermischer Energie nach Anspruch 1, **dadurch gekennzeichnet, dass** der Primärkreis (20) Wärme im Bereich eines Auspuffs des Fahrzeuges abführt.

3. Vorrichtung zur Verwaltung von thermischer Energie nach Anspruch 1, **dadurch gekennzeichnet, dass** der Primärkreis (20) Wärme im Bereich des Reformers (5) abführt.

4. Vorrichtung zur Verwaltung von thermischer Energie nach einem der Ansprüche 2 oder 3, **dadurch gekennzeichnet, dass** der Primärkreis (20) die Wärme durch Konvektion oder durch direkten Kontakt mit einem heißen Teil des Reformers (5) und/oder des Auspuffs abführt.

5. Vorrichtung zur Verwaltung von thermischer Energie nach einem der Ansprüche 1 bis 4, **dadurch gekennzeichnet, dass** sie wenigstens einen Wärmeaustauscher durch Konvektion (19, 27) umfasst, der die Erwärmung eines Organs des Fahrzeuges gewährleistet.

6. Vorrichtung zur Verwaltung von thermischer Energie nach Anspruch 5, **dadurch gekennzeichnet, dass** sie einen Wärmeaustauscher durch Konvektion (19) umfasst, der den Austausch von Wärme mit dem Kühlkreis (12) eines Motors (2) des Fahrzeuges ermöglicht.

7. Vorrichtung zur Verwaltung von thermischer Energie nach einem der Ansprüche 1 bis 6, **dadurch gekennzeichnet, dass** jeder Austauscher durch Sorption (24,25,26) einen Sekundärkreis (38,39,40) eines zweiten Kälteträgerfluids umfasst, der vom Primärkreis (20) isoliert ist und der als heiße Quelle einen Bypass des Primärkreises verwendet.

8. Vorrichtung zur Verwaltung von thermischer Energie nach einem der Ansprüche 1 bis 7, **dadurch gekennzeichnet, dass** sie ein Steuergehäuse (22) umfasst, das die Steuerung der Temperaturen der verschiedenen Wärmeaustauschkreise in Abhängigkeit der Sollwerte, die durch eine Bedienperson gegeben werden oder in einem Speicher aufbewahrt werden, gewährleistet.

9. Vorrichtung zur Verwaltung von thermischer Energie nach einem der Ansprüche 1 bis 8, **dadurch gekennzeichnet, dass** sie einen Austauscher durch Sorption umfasst, der das Kühlen von elektronischen Kreisen (28) ermöglicht.

10. Vorrichtung zur Verwaltung von thermischer Energie nach einem der Ansprüche 1 bis 9, **dadurch gekennzeichnet, dass** sie einen Austauscher durch Sorption umfasst, der das Kühlen wenigstens eines thermischen Isolationskastens (45,48,50,52) im Bereich eines heißen Abschnittes des Fahrzeuges ermöglicht.

11. Vorrichtung zur Verwaltung von thermischer Energie nach einem der Ansprüche 1 bis 10, **dadurch gekennzeichnet, dass** sie einen Austauscher durch Sorption umfasst, der das Kühlen wenigstens einer Batterie (6) zur Speicherung elektrischer Energie ermöglicht.

12. Vorrichtung zur Verwaltung von thermischer Energie nach einem der Ansprüche 1 bis 11, **dadurch gekennzeichnet, dass** sie einen Austauscher durch Sorption umfasst, der das Kühlen einer Einheit zur Klimatisierung (29) des Fahrzeuges ermöglicht.
